**Europäisches Patentamt**

(19) **European Patent Office**

**Office européen des brevets**

(11) Publication number: **0 276 075 B1**

## (12) EUROPEAN PATENT SPECIFICATION

(45) Date of publication of patent specification:
29.05.91 Bulletin 91/22

(51) Int. Cl.⁵: **B05D 1/32, B41M 1/30**

(21) Application number: **88300231.3**

(22) Date of filing: **12.01.88**

(54) Method of producing characters, symbols, patterns on thermoplastic resin moulded articles.

(30) Priority: **21.01.87 JP 12117/87**

(43) Date of publication of application:
27.07.88 Bulletin 88/30

(45) Publication of the grant of the patent:
29.05.91 Bulletin 91/22

(84) Designated Contracting States:
**AT BE CH DE ES FR GB GR IT LI LU NL SE**

(56) References cited:
**EP-A- 0 107 983**
**GB-A- 1 517 832**
**US-A- 4 634 607**

(73) Proprietor: **POLYPLASTICS CO. LTD.**
**30, Azuchimachi 2-chome**
**Higashi-ku Osaka-shi Osaka (JP)**

(72) Inventor: **Fukui, Kiichiro**
**324, Miyashita**
**Fuji-shi Shizuoka (JP)**

(74) Representative: **Jackson, Peter et al**
**HYDE, HEIDE & O'DONNELL 10-12 Priests Bridge**
**London SW15 5JE (GB)**

**Description**

The present invention relates to the known method of producing characters, symbols or patterns on a thermoplastic resin molded article by character reserve dyeing

Thermoplastic resins including, for example, aromatic polyester resins, such as polybutylene terephthalates, and polyacetal resins, have excellent mechanical strength, chemical resistance, frictional wear characteristics, creep properties, fatigue properties, electrical characteristics, and dimensional stability, and also have good molding properties. Therefore, they are widely used in various industrial fields including electrical ant electronic components, automotive parts, and other industrial machinery parts. With such development of markets for them, their uses in which molded parts are formed with characters, etc. for some functional purpose are growing large.

Several methods are known for producing characters etc. on articles. US-A-4634607 relates to directly applying lettering and designs to an automobile body by brushing heavily pigmented acrylic paint across a mask secured to the body surface, which mask has the required lettering or design precut therein. After the paint has dried the mask is carefully removed, leaving the paint applied to the cutout area clearly visible on the auto body as the required lettering or design. As an alternative to painting it has been proposed to use dyestuffs. GB-A-1517832 relates to printing a design on a polyester film by positioning a sheet having thereon one or more sublimable dyestuffs in the shape of the design, overlying the dye-bearing sheet on the polyester film and heating the sheet so as to transfer the dye, and thus the design, to the film.

With regard to producing characters etc. on molded articles, one known method is that characters, etc. are coated on a resin surface by offset printing, screen printing, or pad printing. Another method is such that characters, etc. are transferred by hot-stamping. Another method is such that an area representing the characters, etc is recessed during the process of molding in a die, the recessed area being filled with an ink after molding. However, these methods have deficiencies in respect of wear resistance of the character portion against repeated use, feel and comfort in use, resistance to light and heat, resistance to chemicals, applicability for provision of a large variety of characters and to machine diversification, productivity, and/or ease of work. Recently, therefore, impregnation printing techniques are receiving a good deal of attention. Among such techniques are a method such that characters are printed directly on a molded article by pad printing, screen printing, or the like using a special ink incorporating a sublimative dye, and thereafter the molded article is heat treated so that the sublimative dye in the ink is impregnated into the interior of the molded article for fixation therein (direct method) ; and a method such that characters are printed on a release paper by using such special ink and then the printed release paper is placed on a molded article and applied thereon by heat so that the sublimative dye in the ink is impregnated into the interior of the molded article for fixation therein (heat transfer method). According to such impregnation printing method, since the sublimative dye is impregnated into the resin and retained therein, the characters, etc. are provided with good wear resistance so that they will not fade away even after repeated use, and they have good touch qualities during use. Further, such method has good applicability for provision of a large number of characters and to machine diversification, and offers good productivity. Indeed, the impregnation printing techniques have good advantages over the older methods for provision of characters, etc. Yet, such methods for producing characters, etc. by impregnation printing are not universal. The impregnation of the sublimative dye into the resin makes a demerit rather than a merit. That is, such method involves a difficulty in that if an attempt is made to produce characters, etc. with a bright tone dye (white in particular) on a resin of a dark tone (black in particular), the color of the substrate resin and the color of the dye intermingle with each other at the character portion or the color of the dye is negated by the color of the substrate resin, it being thus unable to produce characters in clear tone. Despite the fact that characters, etc. produced in such color combination (particularly, in black for peripheral area and in white for characters), more often than not, are preferred, because they are clear in contrast, easy to see, reposeful, and convey a feeling of high quality, the impregnation printing techniques cannot meet this requirement.

Thus, development has been strongly desired of a method of producing characters which can retain the advantageous characteristics of the impregnation printing techniques, such as high wear resistance of the character area, good touch qualities during use, and applicability for provision of a large variety of characters, and yet which can provide characters in bright color tone in contrast to a peripheral area in dark color tone (particularly, in a color combination of white for the characters and black for the peripheral area).

[Means for Solving the Problem]

In order to overcome the foregoing difficulty and to develop a method of producing characters which can well meet said demand, the present inventor made extensive studies and this has led to the present invention.

The method of the invention is characterized in that in order to produce characters, etc. on a thermoplastic resin molded article, a dye impenetrable cover is first applied to that part of the surface of the molded article corresponds to the characters etc. to be produced (hereinafter referred to as "characters, etc. portion"), impregnation dyeing being then effected on parts of the molded article surface other than those parts which correspond to the characters etc.. The cover is subsequently removed to reveal the characters etc.. Typically the method may be called "character reserve dyeing".

Thus the present invention provides a method of producing characters, symbols or patterns (hereinafter referred to as "characters etc.") on a thermoplastic resin molded article by character reserve dyeing, characterised by the steps of :

(a) first applying to those parts of the surface of the molded article which correspond to the characters etc. to be produced a dye-impenetrable cover which does not substantially penetrate into the molded article ;

(b) applying an impregnating dye to parts of the molded article surface other than those parts which correspond to the characters etc., including application to at least the parts of the surface peripheral to the parts which correspond to the characters etc. ; and subsequently

(c) removing the dye-impenetrable cover from those parts of the surface of the molded article which correspond to the characters etc., whereby the characters etc. are revealed as such.

The scope of thermoplastic resins useful in the method of character reserve dyeing of the invention is not particularly limited. All such resins which are dyeable alone or in a combination of two or more kinds may be used. Above all, those having a moderate degree of crystallizability and, more particularly, aromatic polyester resins, such as polybutylene terephthalates, and aromatic polyester resins are preferred. Mixture resins comprising any of these resins and a reasonable proportion of any of such other kinds of resins as polyethylene, polypropylene ; homopolymer or copolymer of $\alpha$-olefin, and modifications thereof ; polyurethane, acrylonitrile-styrene (AS) resin, acrylonitrile-butadiene-styrene (ABS) resin, methyl methacrylate-butadiene-styrene (MBS) resin, ethyleneethylacrylate (EEA) resin, polycarbonate resin, fluorine plastic, and polyamide resin may be used as well.

In the present invention, it is possible to add to such substrate resin any known additive and/or filler according to the intended specific purpose, insofar as such addition is not substantially detrimental to the effect of dyeing with a sublimative dye. The additives and/or fillers useful in this connection include, for example, various kinds of stabilizers for anti-oxidation, weathering, and other purposes, lubricants, plasticizers, nucleating agents, parting agents, anti-static agents, and surface active agents ; and/or fibrous, lamellar, granular, and powdery materials, such as glass fiber, potassium titanate, glass flake, glass bead, mica, talc, wollastonite, calcium carbonate, titanium carbonate, alumina, boron nitride, ceramic, and metallic powder. Further, the resin may be colored with a mixture of dyes and/or pigments. In incorporating any of these additives into the resin, however, it is desirable that coloration should be limited so as not to hinder the provision of a sufficient post-dyeing color contrast, in consideration of the feature of the character reserve dyeing of the invention that the character portion remains undyed and shows itself in the color of the material thereof while the peripheral area is shown in a color in which it is dyed or in a mixed color of the dye and the material. Generally, it is desirable to apply the method of the invention to a molded article comprised of a non-colored resin or a resin colored in white or in a bright color tone, dyeing the characters, etc. peripheral area with a black dye or a dark color dye of deep shade.

According to the invention, when subjecting a molded article of such thermoplastic resin to character reserve dyeing, a cover is applied to the characters, etc. portion so that said characters, etc. portion is prevented from being dyed in the process of dyeing.

In this conjunction, the cover for the characters, etc. portion and the manner of covering said portion should be such that the characters, etc. portion is accurately covered for being prevented from entry of the dye thereinto and can easily be uncovered after dyeing. For such covering may be mentioned as useful, for example, inks, dyes, pigments, or paints of the type which is not penetrable into a resin material, and instant lettering or masking tapes. It is particularly preferable to cover with an ink which will not substantially penetrate into a thermoplastic resin by pad printing or otherwise. This way of covering is advantageous in many respects : simple to carry out, adaptable to a large variety of characters, etc., and effective for the covering of fine characters, etc.

A molded article whose characters, etc. portion has been covered is then subjected to dyeing with a sublimative dye. In this stage, a suitable sublimative dye is selected according to the desired color, and if necessary depending upon the color requirements, two or more kinds of sublimative dyes are used in mixture. The dye may be in the form of a composition containing a vehicle, an auxiliary, and the like, for example, an impregnation printing ink.

The reasons why sublimating dyes are used in the method of this invention are : that good and effective penetration into the resin can be achieved ; that bright and stable color effect is obtainable ; and that the dye is less liable to blur into the characters, etc. portion, bright character formation being thus assured. Production of characters, etc. with such excellent features cannot be achieved by dyeing with general-purpose disperse dyes or the like.

For the purpose of depositing such sublimative dye on the molded article, various techniques can be employed including : brushing method, spray method, immersion method, and printing techniques, such as pad printing. The molded article on which the dye has thus been deposited is then heated, whereby the dye is impregnated into the resin. The dyeing stage has now been completed. It is also possible to carry out this series of operation in a heated dye bath in which the molded article is immersed, which way of operation is advantageous if the molded article is of a complex configuration. Optimum heating conditions are empirically selected in consideration of various factors, such as thermal properties of the substrate resin, type of the dye, and rate of dye penetration. For example, if the substrate resin is a polybutylene terephthalate resin or polyacetal resin, heating at 100 ~180°C (but below the melting point of the resin) for 1 ~30 min is preferred, but it is understood that applicable heating conditions are not limited to these. The depth of dye penetration is preferably within the range of 3 ~500 μ. If it is less than 3 μ, no durable dye effect can be obtained, and if it is greater than 500 μ, the dye is more liable to bleed toward the characters, etc. portion, which fact means lack of practical serviceability. Whether the depth of dye penetration is proper or not has a close relation with the width of the characters, etc. to be produced. If the width of the characters is small, dye penetration should be made less deep.

The molded article which has thus been dyed is finally uncovered at its characters, etc. portion. There is no limitation as to how to remove the cover. However, it is preferable to cover the characters, etc. portion with a material which is soluble in a solvent or the like, as already mentioned, and to remove the cover material by dissolving it with a solvent or the like. This way of removing is most efficient and most preferred.

The process of character reserve dyeing according to the invention has now been completed. The dyed article thus obtained may be further dyed in a different color.

[Examples]

The invention will be explained in further detail with reference to the following examples. It is understood, however, that the invention is not limited by the examples.

Examples 1 ~4 and Comparative Examples 1 ~6

Thermoplastic resin compositions, each comprising a polybutylene terephthalate (PBT) resin [Juranex 2000 ; product of Polyplastics Co., Ltd.] or a polyacetal (POM) resin [Jurakon M90-02 ; product of Polyplastics Co., Ltd.], and in mixture therewith, 20% by weight of glass fiber, were molded into flat plates (50mm × 70mm × 3mm) by injection molding. The flat plates were used as test specimens.

Then, each specimen was subjected to character reserve dyeing in the following manner, whereby the characters were produced on the specimen.

The specimen was first degreased by ultrasonic washing in a 1,1,1-trichloroethane solution and then dried. Nextly, characters were printed by pad printing on the specimen with a water-based resist ink (produced by Juko Kako K.K.). The ink used was of the type which was not substantially penetrable into the resin ; it simply remained as deposited on the surface of the specimen. This ink is soluble in 1,1,1-trichloroethane, for example.

Then, in order to dye other parts of the specimen than the characters, an ink (black), SMX PBT (Indian ink) F-1/reducer liquid WKLTD = 10/1 (product of Toyo Ink Mfg. Co.), was deposited on the entire surface of the specimen, and the specimen was heated at 160°C for 8 min, whereby the ink (dye) was penetrated into the resin for fixation therein. It is noted in this connection that the ink used for the purpose of dyeing was one containing a sublimative dye.

Finally, the surface of the specimen was washed with 1,1,1-trichloroethane, whereby the water-based resist ink covering the character portion was removed and simultaneously the specimen was degreased. Then, the specimen was dried.

The specimens thus passed through the process of character reserve dyeing were evaluated on the following points :

①Appearance (contrast)

Contrast of the character portion to the pheripheral area ; color brightness.

②Appearance (ink bleeding, etc.)

Dye bleeding, etc. ; brightness of the border area between the character portion and the peripheral area.

4

③ Heating and moistening test

Appearance (constrast, dye bleed, etc. considered together) after 10-day treatment in a thermo-hygrostat bath at 80°C, 95% RH.

④ Wear resistance

Appearance after application of 500 g pressure, 10,000 times, with a plastic eraser (contrast, dye bleed, etc. considered together).

The results are shown in Table 1.

The character reserve-dyed test pieces obtained in these examples were almost free of dye bleeding toward the character portion, showing high brightness of the character portion and good contrast, with excellent visual appearance. These features were not impaired to any perceivable extent in the heating and moistening tests, nor in the wear resistance tests, the specimens being thus found as having sufficient service durability.

For purposes of comparison, black colored specimens were used which were individually made of compositions prepared by admixing carbon black into respective resins of Examples 1 ~3 so that same color effect as in the examples could be obtained. After application of a base coat, each specimen was subjected to printing with a white ink and then given top coating (Comparative Examples 1, 2, 5). Each of these printed specimens showed good appearance well comparable to the Example 1 specimen, but it had a very serious deficiency in that the characters were readily peeled off and removed in wear resistance tests. Moreover, since its printed portion (characters) was raised, it was inferior in respect of touch. As such, the comparative specimens were far from the target of the invention. For further comparison purposes, same resin moldings as those used in Examples 1 ~3 were dyed with a disperse dye at 85°C for 50 min. In other respects, they were treated in same way as in Examples 1 ~3 (Comparative Examples 3, 4, 6). In this case, the character portion was sufficiently durable, but on the other hand the following deficiencies were observed : that the dye bled towards the character portion to an appreciable extent ; and that variation in the color tone of the dyed portion was considerable depending upon the dyeing conditions, thus causing lack of contrast and brightness. These defects became far much greater as a consequence of heating and moistening tests, pointing to the lack of practical serviceability.

The results of these comparative examples are also shown in Table 1.

Table 1

| | | | Example | | Comp. Example | | | | Example | | Comp. Example | |
|---|---|---|---|---|---|---|---|---|---|---|---|---|
| | | | 1 | 2 | 1 | 2 | 3 | 4 | 3 | 4 | 5 | 6 |
| Composition | PBT resin (wt %) | | 100 | 80 | 100 | 80 | 100 | 80 | - | - | - | - |
| | POM resin (wt %) | | - | - | - | - | - | - | 100 | 80 | 100 | 100 |
| | Glass fiber (wt %) | | - | 20 | - | 20 | - | 20 | - | 20 | - | - |
| Resin color | | | Self color | Self color | Blk colored | Blk colored | Self color | Self color | Self color | Self color | Blk colored | Self color |
| Dye (or ink) color | | | Black | Black | White (ink) | White (ink) | Black | Black | Black | Black | White (ink) | Black |
| Character producing method *1 | | | Mthd A | Mthd A | Mthd B | Mthd B | Mthd C | Mthd C | Mthd A | Mthd A | Mthd B | Mthd C |
| Evltn results | Appearance (contrast) *2 | | 10 | 10 | 10 | 10 | 7 | 7 | 10 | 10 | 10 | 7 |
| | Appearance (dye bleed, etc.) *3 | | 10 | 10 | 10 | 10 | 7 | 7 | 9 | 9 | 10 | 6 |
| | Appearance after wet heat test *4 | | 8 | 8 | 9 | 9 | 4 | 5 | 7～8 | 7 | 9 | 4 |
| | Wear resistance *5 | | ◎ | ◎ | X | X | ◎ | ◎ | ◎ | ◎ | X | ◎ |

*1 Method A ····· character reserve dyeing according to the invention (wherein a sublimative dye is used)

Method B ····· black-colored molding colored with white ink by ordinary printing

Method C ····· Disperse dye used; otherwise Method A applicable

*2 Contrast of character portion to peripheral area; color brightness   10 ←———→ 1
                                                         excel        poor

*3 Dye bleed, etc., color brightness of border area between character portion and peripheral area
                                                         10 ←———→ 1
                                                         excel        poor

*4 Appearance after 240 hr treatment at 80 °C, 95% RH (contrast, dye bleed, etc. considered together)
                                                         10 ←———→ 1
                                                         excel        poor

*5   ◎ ←———→ X
    no change    chr fade away

EP 0 276 075 B1

Examples 5 ~8 and Comparative Examples 7 ~10

As Table 2 shows, thermoplastic resin compositions comprising same polybutylene terephthalate resin as used in Example 1 and, in mixture therewith, ABS resin, AS resin, or EEA resin, and a thermoplastic resin composition comprising same polyacetal resin as used in Example 3 and, in mixture therewith, a polyurethane resin, were used. Molded specimens were dyed in same way as in Examples 1 and 3.

The character reserve dyed specimens in these Examples showed good appearance well comparable to those obtained in Examples 1 and 3. Nothing abnormal was found with them in moisture, heat and wear resistance tests.

The test results are shown in Table 2.

For purposes of comparison, black colored moldings formed of compositions comprising those used in Examples 5 and 8 and, in mixture therewith, a pigment were printed with a white ink. As anticipated, they were very much inferior in wear resistance. (Examples 7, 9). Also, tests were carried out by using a disperse dye and in same manner as in Examples 5 and 8. In these tests, considerable dye bleed was found and the dyed portion lacked color brilliance (Comparative Examples 8, 9).

The results were also shown in Table 2.

Table 2

| | | | Example | | | | Comparative Example | | | |
|---|---|---|---|---|---|---|---|---|---|---|
| | | | 5 | 6 | 7 | 8 | 7 | 8 | 9 | 10 |
| Composition | PBT resin (wt %) | | 70 | 70 | 90 | - | 70 | 70 | - | - |
| | POM resin (wt %) | | - | - | - | 90 | - | - | 90 | 90 |
| | ABS resin (wt %) | | 30 | - | - | - | 30 | 30 | - | - |
| | AS resin (wt %) | | - | 30 | - | - | - | - | - | - |
| | EEA resin (wt %) | | - | - | 10 | - | - | - | - | - |
| | Polyurethane resin (wt %) | | - | - | - | 10 | - | - | 10 | 10 |
| Resin color | | | Self color | Self color | Self color | Self color | Blk colored | Self color | Blk colored | Self color |
| Dye (or ink) color | | | Black | Black | Black | Black | White (ink) | Black | White (ink) | Black |
| Character producing method | | *1 | Mthd A | Mthd A | Mthd A | Mthd A | Mthd B | Mthd C | Mthd B | Mthd C |
| Evln results | Appearance (contrast) | *2 | 10 | 10 | 10 | 10 | 10 | 7 | 10 | 7 |
| | Appearance (dye bleed, etc.) | *3 | 10 | 10 | 9 | 9 | 10 | 7 | 10 | 7 |
| | Appearance after wet treatment | *4 | 9 | 9 | 8 ∿ 9 | 8 | 9 | 5 | 9 | 4 |
| | Wear resistance | *5 | ◎ | ◎ | ◎ | ◎ | X | ◎ | X | ◎ |

*1 ∿ *5  See Table 1.

EP 0 276 075 B1

Examples 9 ~ 16 and Comparative Examples 12 ~ 15

Colored thermoplastic resins, white, yellow, red, and green, each comprising the same polybutylene terephthalate as used in Example 1 and incorporating a pigment, were used. In other respects, character reserve dyeing was carried out in same way as in Example 1 (Examples 9 ~ 12). The post dyeing character color contrast varied depending upon the color of the material resin. Where the white colored material was used, the color contrast was most bright, followed by the yellow colored one. The red and green colored ones were less bright, but were almost free of dye bleed ; and nothing abnormal was found with them in wet heat and wear resistance tests.

By using as a dyeing agent of a color other than black an ink of SMX PBT (indigo) F-1/reducer liquid WKLTD = 10/1 (indigo), a product of Toyo Ink Mfg. Co., character reserve dyeing was carried out with same colored specimens as above mentioned (Examples 13 ~ 16). This ink was also of the type having a sublimative dye content. The color contrast of the dyed portion to the character portion was somewhat lower as a result of color intermingling in the dyed portion (except that no or little contrast lowering was seen in the case of a white colored one), but nothing abnormal was found in other respects, it being thus confirmed that the method of the invention being advantage ously applicable for practical use.

The results are shown in Table 3.

For purposes of comparison, same white colored ones as used in Examples 9 and 13 and same red colored ones as used in Examples 11 and 15 were treated by using black and blue disperse dyes and in same way as above mentioned. However, the pieces so treated were found inferior in contrast of the character to the peripheral area and showed considerable dye bleed. These defects were further aggravated by heating and moistening treatment, it being thus found that they were not suitable for practical use.

The results are shown in Table 3.

Table 3

| | | Example | | | | | | | | Comparative Example | | | | |
|---|---|---|---|---|---|---|---|---|---|---|---|---|---|---|
| | | 9 | 10 | 11 | 12 | 13 | 14 | 15 | 16 | (1) | 12 | 13 | 14 | 15 |
| Comp | PBT resin (wt %) | 100 | 100 | 100 | 100 | 100 | 100 | 100 | 100 | 100 | 100 | 100 | 100 | 100 |
| Resin color | | Wh colored | Yel color-ed | Red color-ed | Grn color-ed | Wh color-ed | Yel color-ed | Red color-ed | Grn color-ed | Dye(or ink) color | Wh color-ed | Red color-ed | Wh color ed | Red color-ed |
| Dye (or ink) color | | Black | Black | Black | Black | Blue | Blue | Blue | Blue | White (ink) | Black | Black | Blue | Blue |
| Char prod mthd *1 | | Mthd A | Mthd A | Mthd A | Mthd A | Mthd A | Mthd A | Mthd A | Mthd A | Mthd B | Mthd C | Mthd C | Mthd C | Mthd C |
| Evln results | Appearance (contrast) *2 | 10 | 9 | 8 | 8 | 10 | 9 | 7 | 7 | 10 | 7 | 5 | 7 | 4 |
| | Appearance (dye bleed, etc.) *3 | 10 | 10 | 10 | 10 | 10 | 10 | 10 | 10 | 10 | 7 | 7 | 7 | 7 |
| | Appearance after wet heat treatment *4 | 8 ∿ 9 | 8 ∿ 9 | 8 | 8 | 8 ∿ 9 | 8 | 8 | 8 | 9 | 4 | 4 | 5 | 4 |
| | Wear resistance *5 | ◎ | ◎ | ◎ | ◎ | ◎ | ◎ | ◎ | ◎ | X | ◎ | ◎ | ◎ | ◎ |

*1 ∿ *5    See Table 1.

[Advantages of the Invention]

As is clear from the above given examples, according to the method of character reserve dyeing, it is possible to produce characters very effectively and economically in such condition that the character peripheral area is dark colored (black in particular) and the character portion is light colored (white in particular). A molded article with characters produced thereon in such manner has excellent wear resistance such that the characters will not fade away even after series of repeated use, good touch qualities during use, and bright color contrast. With a number of good features like these, the method of the invention is a novel one which has never been found in the art.

Molded articles with characters produced thereon according to the method of the invention, coupled with various excellent properties of thermoplastic resins, can be advantageously utilized for a wide range of applications. More particularly, where the material thermoplastic resin is a polybutylene terephthalate resin or a polyacetal resin, because of its excellent physical, chemical, and mechanical properties, as well as good slidability and molding properties, and because of the fact as earlier mentioned, it has excellent affinity for dyes suitable for character dyeing, such molded articles can be advantageously used for various industrial applications including auto parts, such as light switches, turn signal switches and washer switches, electrical and electronic components, such as keys for personal computers, word processors and typewriters, and many other industrial parts.

## Claims

1. A method of producing characters, symbols or patterns on a thermoplastic resin molded article by character reserve dyeing, characterised by the steps of :
   (a) first applying to those parts of the surface of the molded article which correspond to the characters, symbols or patterns to be produced a dye-impenetrable cover which does not substantially penetrate into the molded article ;
   (b) applying an impregnating dye to parts of the molded article surface other than those parts which correspond to the characters, symbols or patterns, including application to at least the parts of the surface peripheral to the parts which correspond to the characters, symbols or patterns ; and subsequently
   (c) removing the dye-impenetrable cover from those parts of the surface of the molded article which correspond to the characters, symbols or patterns, whereby the characters, symbols or patterns are revealed as such.

2. A method as set forth in claim 1, wherein step (a) is effected by forming the cover with an ink which does not substantially penetrate into the molded article

3. A method as set forth in claim 1 or claim 2, wherein the cover is formed of a soluble material and step (c) is effected by washing the surface with a solvent therefor.

4. A method as set forth in claim 3, wherein washing is effected with an organic solvent which simultaneously removes the cover and degreases the article surface.

5. A method as set forth in claim 4, wherein the solvent is 1,1,1-trichlorethane solution.

6. A method as set forth in any preceding claim, wherein the molded article is formed of a thermoplastic resin selected from the group consisting of aromatic polyester resins, polybutylene terephthalate resins and polyacetal resins.

7. A method as set forth in any preceding claim, wherein step (b) is effected so that the depth of penetration of the impregnating dye into the molded article is within the range 3 to 500 μm.

## Ansprüche

1. Verfahren zur Erzeugung von Schriftzeichen, Symbolen oder Mustern auf einem geformten Gegenstand aus einem thermoplastischen Harz durch Schriftzeichen-Reserve-färbung, gekennzeichnet durch die Schritte
   (a) zuerst des Aufbringens einer für den Farbstoff undurchlässigen Abdeckung, die im wesentlichen nicht in den geformten Gegenstand eindringt, auf diejenigen Teile der Oberfläche des geformten Gegenstandes, die den zu erzeugenden Schriftzeichen, Symbolen oder Mustern entsprechen ;
   (b) des Aufbringens eines eindringenden Farbstoffs auf diejenigen Teile der Oberfläche des geformten Gegenstandes, die nicht den Schriftzeichen, Symbolen oder Mustern entsprechen, einschließlich des Aufbringens auf wenigstens diejenigen Teile der Oberfläche, die an der Peripherie derjenigen Teile liegen, die den Schriftzeichen, Symbolen oder Mustern entsprechen ; und anschließend

(c) des Entfernens der für den Farbstoff undurchlässigen Abdeckung von denjenigen Teilen der Oberfläche des geformten Gegenstandes, die den Schriftzeichen, Symbolen oder Mustern entsprechen, wodurch die Schriftzeichen, Symbole oder Muster als solche erkennbar gemacht werden.

2. Verfahren nach Anspruch 1, worin Schritt (a) in der Weise erfolgt, daß die Abdeckung mittels einer Druckfarbe gebildet wird, die im wesentlichen nicht in den geformten Gegenstand eindringt.

3. Verfahren nach Anspruch 1 oder Anspruch 2, worin die Abdeckung aus einem löslichen Material gebildet wird und der Schritt (c) mittels Waschen mit einem Lösungsmittel für dieses erfolgt.

4. Verfahren nach Anspruch 3, worin das Waschen mit einem organischen Lösungsmittel vorgenommen wird, das gleichzeitig die Abdeckung entfernt und die Oberfläche des Gegenstandes entfettet.

5. Verfahren nach Anspruch 4, worin das Lösungsmittel eine 1,1,1-Trichlorethan-Lösung ist.

6. Verfahren nach irgendeinem vorhergehenden Anspruch, worin der geformte Gegenstand aus einem thermoplastischen Harz gebildet ist, das aus der aus aromatischen Polyester-Harzen, Polybutylenterephthalat-Harzen und Polyacetal-Harzen bestehenden Gruppe ausgewählt ist.

7. Verfahren nach irgendeinem vorhergehenden Anspruch, worin der Schritt (b) in der Weise erfolgt, daß die Eindringtiefe des eindringenden Farbstoffs im Bereich von 3 bis 500 µm liegt.

## Revendications

1. Un procédé pour produire des caractères, symboles ou dessins sur un article moulé en résine thermoplastique par coloration avec réserve de caractère, caractérisé par les étapes suivantes :

(a) appliquer d'abord aux parties de la surface de l'article moulé qui correspondent aux caractères, symboles ou dessins à produire un revêtement impénétrable au colorant, qui ne pénètre sensiblement pas dans l'article moulé ;

(b) appliquer un colorant imprégnant aux parties de la surface de l'article moulé autres que les parties qui correspondent aux caractères, symboles ou dessins, y compris par application au moins sur les parties de la surface situées à la périphérie des parties qui correspondent aux caractères, symboles ou dessins; et ensuite

(c) enlever le revêtement impénétrable au colorant des parties de la surface de l'article moulé qui correspondent aux caractères, symboles ou dessins, si bien que les caractères, symboles ou dessins sont révélés comme tels.

2. Un procédé tel que défini dans la revendication 1, dans lequel l'étape (a) est exécutée en formant le revêtement avec une encre quine pénètre sensiblement pas dans l'article moulé.

3. Un procédé tel que défini dans la revendication 1 ou la revendication 2, dans lequel le revêtement est constitué d'une matière soluble et l'étape (c) est exécutée en lavant la surface avec un solvant de cette matière.

4. Un procédé tel que défini dans la revendication 3, dans lequel le lavage est effectué avec un solvant organique qui enlève le revêtement et dégraisse simultanément la surface de l'article.

5. Un procédé tel que défini dans la revendication 4, dans lequel le solvant est une solution de 1,1,1-trichloréthane.

6. Un procédé tel que défini dans l'une quelconque des revendications précédentes, dans lequel l'article moulé est constitué d'une résine thermoplastique choisie dans le groupe formé par les résines polyesters aromatiques, les résines de polytéréphtalate de butylène et les résines polyacétals.

7. Un procédé tel que défini dans l'une quelconque des revendications précédentes, dans lequel l'étape (b) est exécutée de telle manière que la profondeur de pénétration du colorant imprégnant dans l'article moulé s'inscrive dans l'intervalle de 3 à 500 µm.